Europäisches Patentamt

European Patent Office

Office européen des brevets

(19)

(11) Veröffentlichungsnummer : **0 117 294**
**B1**

(12)                    **EUROPÄISCHE PATENTSCHRIFT**

(45) Veröffentlichungstag der Patentschrift :
20.08.86

(51) Int. Cl.⁴ : **G 03 B 27/18**

(21) Anmeldenummer : **83111690.0**

(22) Anmeldetag : **23.11.83**

(54) **Lichtpausmaschine.**

(30) Priorität : 26.01.83 DE 3302475

(43) Veröffentlichungstag der Anmeldung :
05.09.84 Patentblatt 84/36

(45) Bekanntmachung des Hinweises auf die Patenterteilung : 20.08.86 Patentblatt 86/34

(84) Benannte Vertragsstaaten :
AT CH DE FR GB IT LI NL SE

(56) Entgegenhaltungen :
DD-A-    84 323
DE-A- 1 522 850
DE-A- 2 747 911
DE-A- 2 841 461

(73) Patentinhaber : **Lüllau, Georg**
**Hofkamp 2**
**D-2123 Bardowick (DE)**

(72) Erfinder : **Lüllau, Georg**
**Hofkamp 2**
**D-2123 Bardowick (DE)**

(74) Vertreter : **Glawe, Delfs, Moll & Partner Patentanwälte**
**Postfach 26 01 62 Liebherrstrasse 20**
**D-8000 München 26 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung bezieht sich auf eine Lichtpausmaschine mit einem zwischen einer ebenen, starren und lichtdurchlässigen Scheibe und einer weichelastischen Scheibe gebildeten Führungsspalt durch die Belichtungsstation sowie mit Förderelementen für das Pausgut, die ein vor dem Führungsspalt und gegebenenfalls ein dahinter angeordnetes Treibwalzenpaar umfassen.

Lichtpausmaschinen mit ebenem Führungsspalt für das Pausgut wurden vorgeschlagen, um den bei gekrümmter Führungsbahn unvermeidlichen Nachteil der Maßverschiebung zwischen Vorlage und Pause zu vermeiden (DE-A-1 522 850 ; DE-A-27 47 911 ; DE-U-1 976 447). Jedoch ergeben sich dabei Probleme, die den sicheren Transport des Pausguts durch den Führungsspalt und die gleichmäßige Anlage des Pausguts betreffen. Der einwandfreie Transport des Pausguts ist abhängig von einem gleichmäßigen Reibschluß zwischen dem Pausgut und den im Stand der Technik vorgesehenen Transportbändern. Während bei gekrümmter Führungsbahn die für diesen Reibschluß erforderliche gleichmäßige Anpressung der Transportbänder an das Pausgut ohne weiteres durch die Krümmung und Längszugspannung der Transportbänder zustande kommt, muß bei geradlinig geführten Transportbändern dieser Andruck künstlich durch igendwelche Andruckmittel herbeigeführt werden, die im allgemeinen nur punktweise wirken können, wenn nicht sehr hoher konstruktiver Aufwand betrieben wird. Dadurch wird die Gleichmäßigkeit der Transportführung gefährdet und die Entstehung von Wellen im Pausgut gefördert. Was die gleichmäßige, vollflächig abstandsfreie Anlage der Vorlage an der Pause angeht, so ist diese bei gekrümmter Bahn ohne weiteres gegeben, ohne daß es außer den Förderbändern noch weiterer Andruckmittel bedarf. Bei ebener Pausgutführung ist es hingegen erforderlich, besondere, ganzflächig wirkende Andruckmittel· vorzusehen, die für die überall gleichmäßige Anlage der Vorlage an der Pause sorgen. Diese Andruckmittel werden bei dem genannten Stand der Technik von einer weichelastischen Scheibe gebildet, die von starren Rahmenteilen abgestützt ist. Da die Rahmenteile nur stellenweise auf die weichelastische Scheibe einwirken, kann kein ganzflächig gleichmäßiger Druck erzeugt werden. Vielmehr ist zu befürchten, daß ein hinreichender Druck jeweils nur dort zustande kommt, wo die weichelastische Scheibe von den Rahmenteilen unterstützt ist, während in Entfernung davon keine abstandsfreie Anlage der Blätter des Pausguts aneinander gewährleistet ist. Zu befürchten ist außerdem, daß in dem Bestreben, auch in den der Rahmenunterstützung ferneren Bereichen eine hinreichende Anlage zu erzielen, die Anpressung der weichelastischen Scheibe so stark eingestellt wird, daß in den unterstützten Bereichen eine zu hohe, den Transport des Pausguts ernstlich behindernde Pressung zustande kommt. Schließlich muß auf die Einwirkung der weichelastischen Platte auf das Pausgut in denjenigen Bereichen verzichtet werden, in denen die Transportbänder liegen. Alle diese Eigenschaften der bekannten Lichtpausmaschine führen zu großen konstruktiven Problemen, ohne daß die mit ihnen verbundenen Gefahren unzureichenden Transport mit Wellenbildung und unzureichender gegenseitiger Anlage des Pausguts befriedigend gelöst werden könnten.

Bekannt ist auch eine Lichtpausmaschine (DE-U-1 977 685), in welcher die starre Scheibe nur schwach gekrümmt ist und in welcher zur Ausschaltung der Gefahr einer Maßverschiebung die beiden Blätter des Pausguts eine seitliche Perforation enthalten, die mit Förderelementen der Lichtpausmaschine formschlüssig zusammenwirken und den verschiebungsfreien Transport gewährleisten. Die Förderelemente sind vor und hinter dem Walzenspalt vorgesehen, so daß sie bahnförmiges Material verschiebungsfrei durch die Maschine ziehen können. Der Führungsspalt in der Belichtungseinheit der Maschine wird einerseits von der gekrümmten, starren Glasscheibe und andererseits von einem durch eine Feder gespannt auf der Glasplatte aufliegenden Andruckband gebildet, das auf der Spaltseite mit Polytetrafluoräthylen beschichtet ist, um die Reibung gering zu halten. Förderelemente sind im Führungsspalt nicht vorgesehen. Beim Einlegen von Pausgut drückt man dessen vorlaufendes Ende mit den Fingern in den Spalt zwischen Glasscheibe und Andruckband, wobei das Andruckband von der Glasscheibe abgehoben wird. Sobald das vorlaufende Ende des Pausguts hinten aus dem Führungsspalt herauskommt, kann man es per Hand in die nachgeschalteten Förderelemente einlegen. Diese Vorrichtung ist nur für bandförmig langgestrecktes Pausgut wie Tabellenformulare geeignet, weil das Einlegen des Pausguts sehr umständlich ist und das Pausgut selbst eine pausfreie Vorlaufstrecke zum Einlegen benötigt.

Schließlich sind Lichtpausmaschinen bekannt (DE-A-28 41 461 ; DD-A-84 323), bei denen in der Belichtungsstation die elastische Scheibe in Form einer vollflächig durch ein elastisches Stützmittel gegen die starre Scheibe gedrückte flexible Folie ausgebildet ist. Dabei handelt es sich jedoch um Maschinen mit stationärer Pausguteinspannung, bei denen daher die Gefahr einer Maßverschiebung der beiden Blätter des Pausguts während ihres Transports durch die Maschine nicht auftreten kann.

Der erfindung liegt daher die Aufgabe zugrunde, eine Lichtpausmaschine der eingangs genannten Art zu schaffen, die eine ebenes, maßverschiebungsfreies Pausen mit hoher Sicherheit der planen, gegenseitigen Anlage des Pausguts und unproblematischem Transport ohne Beschränkung auf langgestrecktes Pausgut gestattet.

Die erfindungsgemäße Lösung besteht darin, daß die beiden den Führungsspalt bildenden Oberflächen aus extrem reibungsarmem Werkstoff sind und bis an das vor dem Führungsspalt angeordnete Treibwalzenpaar heran und in Form von Zungen, die in Umfangsnuten der Treibwalzen beiderseits des Walzenspalts liegen, durch das Walzenpaar hindurch geführt sind und in einem vor dem Treibwalzenpaar gelegenen Einführungsabschnitt einen zur Einführung von Pausgut geeigneten Abstand voneinander aufweisen und daß die weichelastische Scheibe von einer im wesentlichen vollflächig durch ein elastisches Stützmittel gegen die starre Scheibe gedrückten, flexiblen Folie gebildet ist.

Dadurch, daß der Führungsspalt sich in Gestalt der ihn bis zum vornliegenden Treibwalzenpaar verlängernden Zungen direkt an den Walzenspalt anschließt und das Papier dadurch keine Gelegenheit zur Wellenbildung erhält, sowie dank dem weiteren Merkmal, daß die Oberflächen des Führungsspalts aus extrem reibungsarmen Kunststoff gebildet sind, kann das Pausgut von dem Treibwalzenpaar durch den Führungsspalt hindurch geschoben werden, ohne daß es besonderer Transportelemente im Führungsspalt bedarf. Dies ist nur dadurch möglich, daß der für die Planlage des Pausguts aufgewendete Druck innerhalb des Führungsspalts extrem reduziert wird. Diese Reduktion ist nur möglich dank der ganzflächigen Wirkung des auf die flexible Folie wirkenden Stützmittels, ohne daß die Ganzflächigkeit beispielsweise durch Führungskanäle für Transportbänder oder dergleichen unterbrochen wird.

Sehr vorteilhaft ist die Ausbildung des elastischen Stützmittels als Schaumkunstharzschicht, die auf der der Folie abgewandten Seite im wesentlichen vollflächig angeordnet ist. Jedoch kann die Folie auch mit einem anderen, hinreichend gleichmäßig wirkenden Stützmittel kombiniert sein, beispielsweise mit einer Vielzahl eng angeordneter und daher praktisch gleichmäßig über die ganze Fläche wirkender Federn oder mit einer Überdruckbeaufschlagung eines unterhalb der Folie befindlichen, geschlossenen Raums, die leicht mit Hilfe der Kühlgebläse erzielt werden kann, weil der erforderliche Druck äußerst gering ist.

Die Verwendung eines extrem reibungsarmen Kunststoffs zur Bildung der Führungsspalt-Oberflächen beinhaltet insofern auch noch einen besonderen erfinderischen Schritt, als die zur Verfügung stehenden extrem reibungsarmen Kunststoffe, wie vorzugsweise Polytetrafluoräthylen und andere Polyfluorkohlenstoffe nicht in einem glasklaren Zustand zu erhalten sind, sondern das Licht nur diffus durchlassen. Der Durchschnittsfachmann auf dem Gebiet der Lichtpausmaschinen, der zur Erhöhung der Lichtausbeute daran gewöhnt ist, für die belichtungsseitige Platte stets solche Werkstoffe zu verwenden, die wie Plexiglas (R) eine maximale Lichtausbeute ergeben, mußte gegen die Verwendung eines solchen, das Licht nur diffus durchlassenden Werkstoffs größte Bedenken haben. Jedoch wirkt sich der geringere Lichtdurchlaß der extrem reibungsarmen Werkstoffe praktisch nur wenig aus, weil sie in nur sehr geringer Schichtdicke angewendet werden.

Die Folie auf der der Platte abgewandten Seite des Führungsspalts kann ganz oder wenigstens auf ihrer dem Führungsspalt zugewandten Seite als Laminat aus dem extrem reibungsarmen Werkstoff wie vorzugsweise Polytetrafluoräthylen etc. bestehen.

Den unmittelbaren Anschluß des Führungsspalts an das diesem vorgeordnete Walzenpaar erreicht man nach der Erfindung dadurch, daß dieses Walzenpaar einander gegenüberliegende Umfangsnuten aufweist, in welche Zungen eingreifen, die in die den Führungsspalt bildenden Teile übergehen. Selbstverständlich können auch die den Führungsspalt bildenden Teile selbst die in die Umfangsnuten des Walzenpaars eingreifenden Zungen bilden. Insbesondere können nach der Erfindung die die Führungsspalt-Oberflächen bildenden Folien an den Führungsorganen bis in den Walzenspalt hineingeführt sein.

Der Transport des Pausguts durch den von Transportbändern freien Führungsspalt ist naturgemäß um so unproblematischer, je kürzer der Führungsspalt in Transportrichtung ist. Will man unter Beibehaltung der Vorteile, die ein kurzer Walzenspalt bietet, hohe Pausgeschwindigkeiten erreichen, die an lange Belichtungsstrecken gebunden sind, so kann man nach der Erfindung mehrere Lichtpauseinheiten unter Zwischenschaltung von Treibwalzenpaaren hintereinander anordnen. Es ist zweckmäßig, wenn in diesem Zusammenhang die die Führungsspalt-Oberfläche in den aufeinanderfolgenden Lichtpauseinheiten bildenden Folien je einstückig durch alle Lichtpauseinheiten hindurch ausgeführt sind mit Ausschnitten für den Durchtritt der zwischen den Umfangsnuten befindlichen Wirkbereiche der Walzenpaare.

Die erfindungsgemäße Kombination der Verwendung reibungsarmer Führungsspaltwerkstoffe mit den großflächig gleichmäßigen und geringen Andruckkräften sowie großflächig genauer Führung des Pausguts macht es sogar möglich, nach einem weiteren Merkmal der Erfindung zwischen dem Original und der Pause eine weitere lichtdurchlässige Folie aus extrem reibungsarmen Werkstoff wie insbesondere PTFE etc. anzuordnen. Mit anderen Worten werden besondere Führungsspalte für das Original einerseits und die Pause andererseits gebildet, so daß diese im Anschluß an den Pausvorgang gesondert weitergeführt werden können, ohne daß es einer besonderen Trenneinrichtung bedarf. Dieser Schritt der Erfindung ist insofern erstaunlich, als die Trennfolie aus den oben geschilderten Gründen nicht glasklar sein kann, sondern lediglich diffus durchscheinend, so daß die Pausqualität gefährdet erscheinen könnte und ferner weil es bisher für absolut notwendig betrachtet wurde, die beiden Blätter des Pausguts in unmittelbarer Anlage aneinander zu führen, wenn genaue Deckungsgleichheit von Original und Pause verlangt wurde. Jedoch hat sich gezeigt, daß bei Verwendung einer sehr dünnen Zwischenfolie die Pausqualiät zumindest für die Zwecke der Textilindustrie (Vervielfältigung von Zuschnitten) und ähnliche Zwecke ausreichend ist. Und es hat sich auch herausgestellt, daß der gemeinsame Antrieb der beiden Blätter durch die dem Führungsspalt vorgeordneten Transportwalzen für den Gleichlauf, der die Deckungsgleichheit bedingt, ausreichend ist.

Vielfach kombiniert man in einer Lichtpausmaschine eine Lichtpauseinheit mit einer Entwicklungseinheit. Dies ist auch im Rahmen der Erfindung möglich, wobei für die Entwicklungseinheit dasselbe Führungs- und Transportprinzip wie für die Belichtungseinheit angewendet werden kann. Die zu entwickelnde Bahn wird durch einen zwischen extrem reibungsarmen Folien gebildeten Führungsspalt durch zwei vorgeschaltete Transportwalzen gedrückt, wobei mindestens eine der beiden Folien zwecks Durchlaß des Entwicklungsgases Durchbrechungen aufweist.

Die Erfindung wird im folgenden näher unter Bezugnahme auf die Zeichnung erläutert, die ein vorteilhaftes Ausführungsbeispiel veranschaulicht. Darin zeigen:

Figur 1 einen Querschnitt durch eine erste Ausführungsform,

Figur 2 eine Draufsicht auf die Ausführungsform gemäß Fig. 1 und

Figur 3 einen Querschnitt durch eine zweite Ausführungsform.

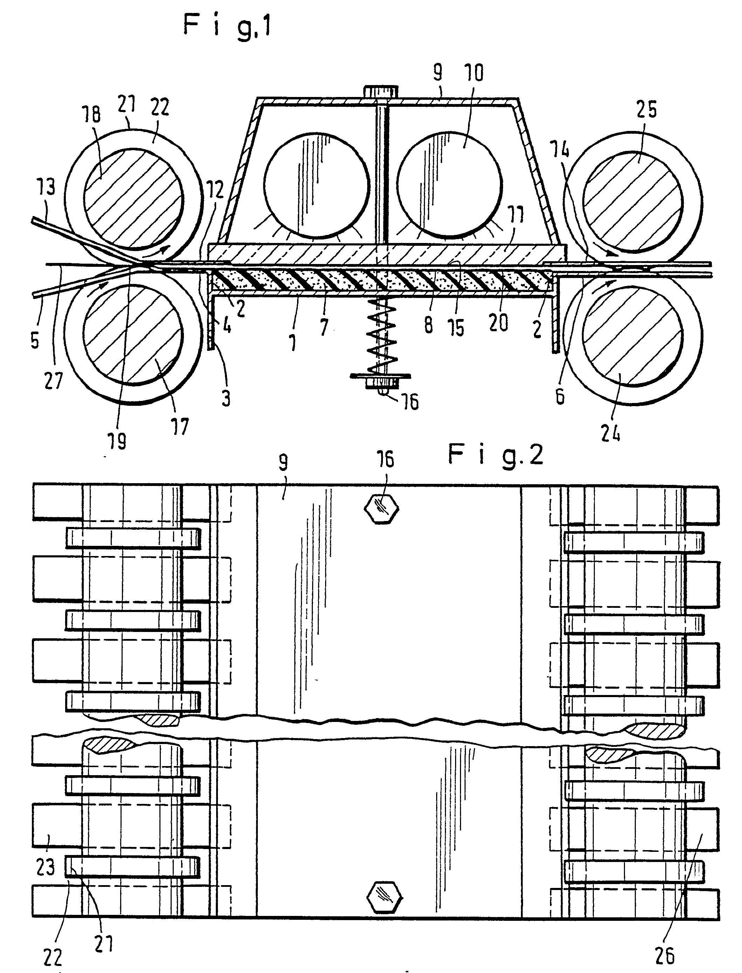

Bei der Ausführungsform gemäß Fig. 1 und 2 ist in einem nicht näher dargestellten Maschinengestell in horizontaler Lage eine steife Platte 1 angeordnet, die an den Längsrändern, die quer zur Durchlaufrichtung des Pausguts verlaufen, hochstehende Ränder 2 aufweist. Es kann eine weitere Profilierung 3 zwecks Versteifung vorgesehen sein. An den einlaufseitigen Rand 2 (links in der Zeichnung) schließt sich in etwas höherer Ebene als die Platte 1 ein längs durchlaufender, horizontaler Flansch 4 an, der weiter vorne einen schwach nach unten abgewinkelten Einführungsabschnitt 5 aufweist. Ein entsprechender Flansch 6 ist am auslaufseitigen Rand 2 in gleicher Höhe mit dem Flansch 4 vorgesehen.

Auf der im Maschinengestell festen Platte 1 liegt eine Schaumstoffschicht 7 aus weichelastischem Werkstoff, deren Dicke nur geringfügig höher ist als die Oberfläche der Flanschen 4 und 6. Darauf befindet sich eine PTFE-Folie 8, die auch mit den Oberflächen der Flanschen 4 und des Einführungsabschnitts 5 verblet ist und im wesentlichen eben und gespannt in Längs- und Querrichtung durchgeht. Die Platte 1 mit den zugehörigen Teilen, die Schaumstoffschicht 7 und die Folie 8 bilden den Unterteil der Lichtpauseinheit. Der Oberteil wird hauptsächlich von dem Belichtungskasten 9 mit den Lampen 10 und der den Belichtungskasten 11 unterseitig abschließenden Glasplatte 11 gebildet, deren Abmessungen im wesentlichen denjenigen der Platte 1 gleichen. Auf der ebenen Unterfläche der Glasplatte 11 liegt eine PTFE-Folie 12 auf. Die Unterfläche der Glasplatte 11 wird einführungsseitig von einer Metallplatte 12 fluchtend fortgesetzt, die einen dem Einführungsabschnitt 5 des unteren Flanschs entsprechenden, ein wenig nach oben gebogenen Einführungsabschnitt 13 aufweist. Eine entsprechende Metallplatte 14 schließt auch auslaßseitig an die Unterfläche der Glasplatte 11 an. Eine PTFE-Folie 15 liegt durchgehend nicht nur auf der Unterfläche der Glasplatte 11, sondern auch auf den Unterflächen der Teile 12, 13 und 14 auf, so daß ein durchgehender Führungsspalt zwischen den Folien 8 und 15 von der Einführungsseite bis zur Auslaßseite gebildet wird.

Der Belichtungskasten 9 mit den damit verbundenen Teilen liegt unter seinem Eigengewicht, gewünschtenfalls vermehrt oder vermindert durch eine Spindel- und Federanordnung 16, auf dem Unterteil der Lichtpauseinheit auf. Die auf der Glasplatte 11 eben gehaltene PTFE-Folie 15 drückt auf die PTFE-Folie 8 und hält diese gegen den Widerstand der Schaumstoffschicht 7, die die PTFE-Folie 8 nach oben vorzuwölben trachtet, in eine ebenfalls plane Lage.

In dem Einführungsbereich, der von dem Flansch 4, der Metallplatte 12 und den Einführungsabschnitten 5, 13 gebildet ist, wirkt ein Walzenpaar 17, 18, dessen Walzenspalt 19 mit dem Führungsspalt 20 zwischen den Folien 8 und 15 fluchtet. Beide Walzen weisen in Axialrichtung abwechselnd ringartige Vorsprünge 21, welche die Wirkflächen für die Bildung des Walzenspalts bilden, und Nuten 22 auf. Die Ringvorsprünge 21 und die Ringnuten 22 stehen einander jeweils genau gegenüber. Der Flansch 4 mit dem Einführungsabschnitt 5 sowie die Metallplatte 12 mit dem Einführungsabschnitt 13 sind kammartig mit einer Vielzahl von Zungen 23 ausgebildet, die jeweils in die Nuten 22 eingreifen. Die Einführungsabschnitte 5 und 13 befinden sich in Einführungsrichtung vor dem Walzenspalt. Spätestens im Walzenspalt beginnen der Flansch 4 und die Metallplatte 12 im paralleler, ebener Anlage aneinander. Das Walzenpaar 17, 18 ist angetrieben, zweckmäßigerweise dadurch, daß die untere Walze 17 direkt angetrieben wird, während die Walze 18 aufgrund ihres Eigengewichts darauf lastend mitläuft.

Auslaufseitig ist ein Walzenpaar 24, 25 angeordnet, das dem Walzenpaar 17 und 18 in der Anordnung zum Walzenspalt gleicht. Die Flanschen 6, 14, die vorzugsweise parallel und eben aneinander anliegen, sind aus Zungen 26 aufgebaut, die jeweils in die Nutenabschnitte des Walzenpaars eingreifen.

Wird das aus Vorlage und Pauspapier bestehende Pausgut in den Einführungsabschnitt 5, 13 eingeführt, so wird es vom Walzenpaar 17, 18 erfaßt und in den Führungsspalt 20 eingeschoben, wobei die den Walzenspalt bildenden Elemente entsprechend der Dicke des Pausguts nachgeben, wobei dieses ständig parallel zu sich selbst weitergeführt wird. Dank der Glätte des den Führungsspalt bildenden Materials und Dank seiner ständig ebenen Führung, die auch zwischen dem Walzenpaar 17, 18 und dem Beginn der eigentlichen Belichtungsstrecke gesichert ist, kann sich das Material an keiner Stelle aufwölben oder zur Faltenbildung neigen. Obwohl die ihm innewohnende Steifheit gering ist, reicht sie aus, um es gegen den Reibungswiderstand durch den Führungsspalt zu drücken, bis es von den auslaufseitigen Walzen 24, 25 erfaßt wird.

Gewünschtenfalls kann sich nun an das auslaufseitige Walzenpaar 24, 25 eine weitere Belichtungsstrecke anschließen, die genauso aufgebaut ist wie die in der Darstellung gezeigte, so daß das Walzenpaar 24, 25 als Einführungswalzenpaar für diese folgende Belichtungsstrecke fungiert. Entsprechend können sich noch weitere Belichtungsstrecken anschließen.

Das Übermaß der Schaumstoffschicht 7 gegenüber der Höhe der Ränder 7 läßt sich leicht so einstellen, daß gerade derjenige Mindestdruck erreicht wird, der erforderlich ist, um das Pausgut ganzflächig parallel zu halten, so daß es sich an keiner Stelle unter der Schiebekraft auch nur geringfügig aufwölben und dann knittern kann.

Die Länge einer Belichtungseinheit zwischen dem einführungsseitigen und dem auslaufseitigen Walzenpaar kann in der Größenordnung von 10 bis 20 cm und gegebenenfalls bei Optimierung der Reibungs- und Andruckverhältnisse oder bei Verwendung steiferen Pausguts auch größer gewählt werden.

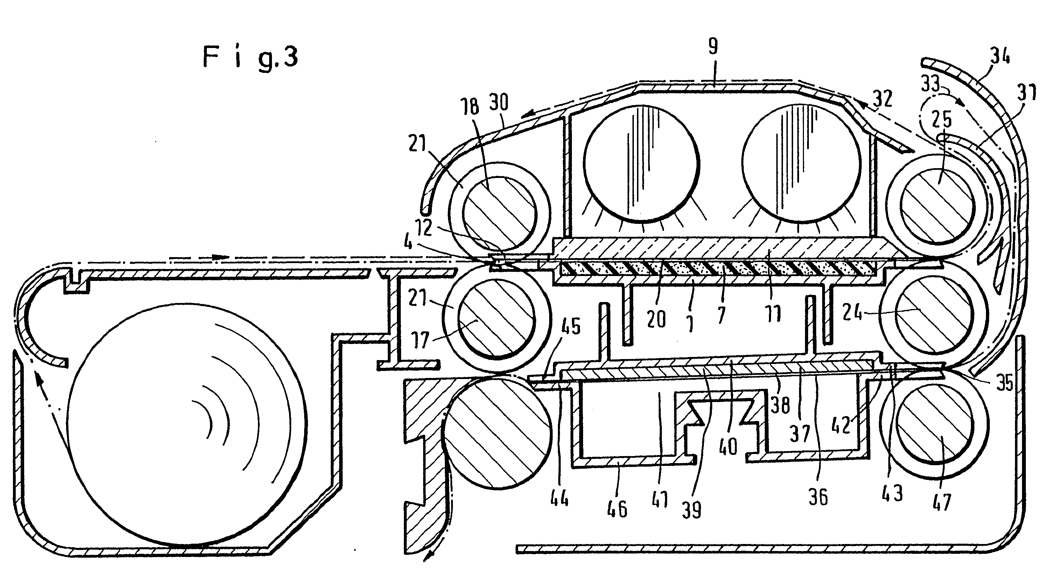

Das Ausführungsbeispiel gemäß Fig. 3 weist im oberen Bereich eine Belichtungseinheit und im unterem Bereich eine Entwicklungseinheit auf.

Die Belichtungseinheit ist sehr ähnlich der unter Bezugnahme auf Fig. 1 und 2 erläuterten aufgebaut. Gleiche Teile sind mit gleichen Bezugsziffern versehen und nicht weiter erläutert.

Die Glasplatte 11 ist als solche bis in den Bereich des Einführungswalzenpaars 17, 18 geführt und bildet im Walzenspalt den Beginn des Führungsspalts. Die Haube 9 ist zum Schutz der Walze 18 bei 30 über diese hinausgezogen. Die Platte 1 ist durch mehrere Rippen versteift. Am Auslaufende des Führungsspalts wird das Pausgut von einem Umlenkblech 31 empfangen und nach oben geführt, wo die beiden Bahnen von Hand getrennt werden können, so daß die Vorlagebahn im Sinne des Pfeils 32 weggenommen und das Pauspapier im Sinne des Pfeils 33 in eine zwischen dem Führungsblech 31 und einem weiteren Führungsblech 34 gebildete Öffung eingeschoben wird, von der aus es durch das Führungsblech 34 zu dem Einführungsabschnitt 35 der Entwicklungsmaschine geführt wird.

Die Entwicklungsmaschine enthält einen Führungsspalt 36, der zwischen zwei PTFE-Folien 37, 38 gebildet ist, von denen die eine in der oben unter Bezugnahme auf die Lichtpausmaschine beschriebenen Art über eine elastische Kunststoff-Schaumschicht 39 von einer ebenen, horizontalen Platte 40 abgestützt ist, während die andere den Ammoniakraum 41 der Entwicklungsmaschine mit oder ohne Abstützung durch eine entsprechende Platte abschließt. Die dem Ammoniakraum zugewandte PTFE-Folie 38 ist gelocht, geschlitzt oder in anderer Weise für den Durchgang des Entwicklungsgases geeignet gemacht. Dasselbe gilt für die diese Folie gegebenenfalls abstützende Platte.

Den einführungs- und auslaßseitigen Abschluß des Führungsspalts bilden Flanschen 42, 43 bzw. 44, 45, die an den Ammoniakkasten 46 bzw. die Platte 40 angeschlossen sind und durchgehend mit den PTFE-Folien 37, 38 bedeckt sind.

Einführungsseitig von der Entwicklungsmaschine ist ein Walzenpaar angeordnet, das einerseits von der auslaßseitigen Walze 24 der Lichtpausmaschine sowie einer weiteren Walze 47 gebildet ist. Ein entsprechendes Walzenpaar, an dem auch die einführungsseitige Walze 21 der Lichtpausmaschine beteiligt sein kann, kann auch an der Auslaßseite der Entwicklungsmaschine vorgesehen sein, obwohl dies hier im allgemeinen nicht erforderlich ist.

Die Funktion der Maschine ergibt sich ohne weiteres aus dem Aufbau. Das Entwicklungsgut wird in den Walzenspalt des Walzenpaars 17, 18 eingeführt und von diesem durch den Führungsspalt 20 geschoben. Während die Vorlagebahn bei 32 abgenommen wird, wird die Pausbahn von Hand gemäß Pfeil 33 umgelenkt zur Entwicklungsmaschine und kann von dieser an der Vorderseite der Maschine abgenommen werden.

Wenn zwischen den den Führungsspalt der Lichtpausmaschine bildenden PTFE-Folien, die in Fig. 1 mit den Bezugsziffern 8, 15 bezeichnet sind, noch eine dritte PTFE-Folie eingefügt wird, werden gesonderte Führungsspalte für die beiden Bahnen des Pausguts gebildet. Diese dritte Folie wird einführungsseitig über den Walzenspalt zwischen den Walzen 17, 18 hinaus verlängert, so daß gesonderte Einführungsabschnitte für die Vorlagebahn und für die Pauspapierbahn gebildet werden. Im Bereich der Walzenpaare 17, 18 bez. 24, 25 enthält sie Ausschnitte im Bereich der Ringvorsprünge 21, so daß diese zusammenwirken und die beiden Bahnen in unmittelbaren Kontakt miteinander erfassen können. Diese dritte, als Trennfolie dienende PTFE-Folie wird dann weitergeführt zwischen der Walze 25 und dem Führungsblech 31, so daß die beiden Bahnen auch getrennt aus der Lichtpauseinheit hervortreten, wobei schließlich die Pauspapierbahn auch selbsttätig von der Trennfolie in den Führungsbereich zwischen den Führungsblechen 31 und 34 hineingelangen kann, um anschließend entwickelt zu werden. Diese Trennfolie kann auch durch eine Mehrzahl von Trennstreifen oder Trennfäden ersetzt werden.

Der Druck, den man in der Lichtpausmaschine zweckmäßigerweise von der nachgiebig abgestützten Folie her auf die festabgestützte Folie ausübt, liegt zweckmäßigerweise zwischen 3 und 20 $kp/m^2$ und vorzugsweise nicht höher als 10 $kp/m^2$.

## Patentansprüche

1. Lichtpausmaschine mit einem zwischen einer ebenen, starren und lichtdurchlässigen Scheibe (11) und einer weichelastischen Scheibe (8) gebildeten Führungsspalt (20) durch die Belichtungsstation sowie mit Förderelementen für das Pausgut, die ein vor dem Führungsspalt und gegebenenfalls ein dahinter angeordnetes Treibwalzenpaar (17, 18) umfassen, dadurch gekennzeichnet, daß die beiden den Führungsspalt (20) bildenden Oberflächen aus extrem reibungsarmem Werkstoff sind und bis an das vor dem Führungsspalt angeordnete Treibwalzenpaar (17, 18) heran und in Form von Zungen (23), die in Umfangsnuten (22) der Treibwalzen (17, 18) beiderseits des Walzenspalts (19) liegen, durch das Walzenpaar hindurch geführt sind und in einem vor dem Treibwalzenpaar gelegenen Einführungsabschnitt (5, 13) einen zur Einführung von Pausgut (27) geeigneten Abstand voneinander aufweisen und daß die weichelastische Scheibe von einer im wesentlichen vollflächig durch ein elastisches Stützmittel (7) gegen die starre Scheibe (11) gedrückten, flexiblen Folie (8) gebildet ist.

2. Lichtpausmaschine nach Anspruch 1, dadurch gekennzeichnet, daß das elastische Stützmittel (7) eine Schaumkunstharzschicht ist, die auf der der Folie (8) abgewandten Seite im wesentlichen vollflächig abgestützt ist.

3. Lichtpausmaschine nach Anspruch 1 oder 2, dadurch gekennzeichnet, daß die Oberfläche der ebenen Scheibe (11) von einer Folie (15) bedeckt ist, die zumindest auf ihrer dem Führungsspalt (20) zugewandten Seite aus dem extrem reibungsarmen Kunststoff besteht.

4. Lichtpausmaschine nach einem der Ansprüche 1 bis 3, dadurch gekennzeichent, daß die flexible Folie (8) zumindest auf ihrer dem Führungsspalt zugewandten Seite aus dem extrem reibungsarmen Kunststoff besteht.

5. Lichtpausmaschine nach einem der Ansprüche 1 bis 4, dadurch gekennzeichnet, daß die im Treibwalzenpaar (17, 18) gebildeten Nuten (22) einander gegenüberliegen.

6. Lichtpausmaschine nach Anspruch 3, 4 und 5, dadurch gekennzeichnet, daß die die Oberfläche des Führungsspalts (20) bildenden Folien (8, 15) an den Zungen (23) mindestens bis in den Walzenspalt (19) geführt sind.

7. Lichtpausmaschine nach einem der Ansprüche 1 bis 6, dadurch gekennzeichent, daß mehrere Lichtpauseinheiten unter Zwischenschaltung von Treibwalzenpaaren hintereinander geschaltet sind.

8. Lichtpausmaschine nach Anspruch 7, dadurch gekennzeichnet, daß die die Führungsspaltoberfläche in den aufeinanderfolgenden Lichtpauseinheiten bildenden Folien je einstückig durch alle Lichtpauseinheiten hindurch ausgeführt sind mit Ausschnitten für den Durchtritt der zwischen den Umfangsnuten befindlichen Wirkbereiche der Walzenpaare.

9. Lichtpausmaschine nach einem der Ansprüche 1 bis 8, dadurch gekennzeichnet, daß zwischen den die Führungsspaltoberflächen bildenden Folien (8, 15) eine dritte Folie aus extrem reibungsarmem Kunststoff enthalten ist zur Bildung zweier gesonderter Führungsspalten für die Vorlagebahn und die Pausmaterialbahn, wobei diese dritte Folie in den zwischen den Umfangsnuten befindlichen Wirkbereichen der Treibwalzenpaare ausgeschnitten ist.

10. Lichtpausmaschine nach einem der Ansprüche 1 bis 9, dadurch gekennzeichnet, daß sie eine Entwicklungsvorrichtung umfaßt, die für das Entwicklungsgut einen zwischen zwei extrem reibungsarmen Folien (37, 38) gebildeten Führungsspalt (36) aufweist und als Förderelement ausschließlich ein einführungsseitig vorgesehenes Treibwalzenpaar sowie gegebenenfalls ein auslaßseitiges Treibwalzenpaar einschließt, wobei die dem Entwicklungsgasraum (41) zugewandte Folie durchbrochen ist und die andere von einer elastischen Schaumkunstharzschicht (39) abgestützt ist, die ihrerseits im wesentlichen vollflächig abgestützt ist.

## Claims

1. A photoprinting machine with a guide clearance (20) through the exposure station, defined between a flat rigid translucent plate (11) and a soft resilient plate (8), and with feed members for the printing material comprising a pair of driving cylinders (17, 18) disposed upstream of the guide clearance and, optionally, a pair of driving cylinders disposed downstream thereof, characterised in that the two surfaces defining the guide clearance (20) are of material with an extremely low coefficient of friction and extend as far as the pair of driving cylinders (17, 18) disposed upstream of the guide clearance and in the form of tongues (23) which are situated in peripheral grooves (22) of the driving cylinders (17, 18) on either side of the cylinder clearance (19) they extend through the pair of cylinders and are suitably spaced from one another for the introduction of printing material (27), and in that the soft resilient plate is formed by a flexible sheet (8) pressed substantially over the whole of its area by a resilient support medium (7) against the rigid plate (11).

2. A photoprinting machine according to Claim 1, characterised in that the resilient support medium (7) is an expanded synthetic resin layer which on the side remote from the sheet (8) is supported substantially over the whole of its area.

3. A photoprinting machine according to Claim 1 or 2, characterised in that the surface of the flat plate (11) is covered with a sheet (15) which, at least on its side facing the guide clearance (20), comprises a plastics material with an extremely low coefficient of friction.

4. A photoprinting machine according to any of Claims 1 to 3, characterised in that, at least on its side facing the guide clearance, the flexible sheet (8) comprises a plastics material with an extremely low coefficient of friction.

5. A photoprinting machine according to any of Claims 1 to 4, characterised in that the grooves (22) formed in the pair of driving cylinders (17, 18) are situated opposite one another.

6. A photoprinting machine according to Claims 3, 4 and 5, characterised in that the sheets (8, 15) forming the surface of the guide clearance (20) are guided on the tongues (23) at least up to the cylinder clearance (19).

7. A photoprinting machine according to any of Claims 1 to 6, characterised in that a plurality of photoprinting units are connected in series with pairs of driving cylinders interposed between them.

8. A photoprinting machine according to Claim 7, characterised in that the sheets forming the guide clearance surface in the successive photoprinting units extend in one piece through all the photoprinting units, with apertures for the passage of the operating portions of the cylinder pairs situated between the peripheral grooves.

9. A photoprinting machine according to any of Claims 1 to 8, characterised in that a third sheet of plastics material with an extremely low coefficient of friction is included between the sheets (8, 15) forming the guide clearance surfaces, so as to form two separate guide clearances for the original web and the web of material to be printed, apertures being provided in the third sheet at the operating portions of the cylinder pairs situated between the peripheral grooves.

10. A photoprinting machine according to any of Claims 1 to 9, characterised in that it comprises a developing apparatus, which for the material to be developed has a guide clearance (36) formed between two sheets (37, 38) with an extremely low coefficient of friction, and as feed member includes exclusively a pair of driving cylinders provided on the inlet side and, optionally, a pair of driving cylinders on the outlet side, the sheet nearest the developing gas chamber (41) being perforated and the other sheet being supported by a resilient expanded synthetic resin layer (39) which is supported substantially over the whole of its area.

**Revendications**

1. Machine à tirer les calques, comportant une fente de guidage (20) à travers le poste d'exposition à la lumière, formée entre une plaque plane, rigide et transparente (11) et une plaque souple (8), ainsi que des éléments transporteurs pour le matériel de tirage qui comprennent une paire de cylindres d'entraînement (17, 18) en amont de la fente de guidage et, le cas échéant, une paire de cylindres en aval de celle-ci, caractérisée en ce que les deux surfaces qui délimitent la fente de guidage (20) sont faites d'une matière à coefficient de friction extrêmement faible, se prolongent jusqu'au-delà de la paire de cylindres d'entraînement (17, 18) disposée en amont de la fente de guidage, en traversant cette paire de cylindres sous forme de languettes (23) qui sont placées dans des gorges circonférentielles (22) des cylindres d'entraînement (17, 18) de part et d'autre de la fente entre cylindres (19), et présentent, dans une section d'introduction (5, 13) située en amont de la paire de cylindres d'entraînement, une distance mutuelle qui convient pour l'introduction du matériel de tirage (27), et en ce que la plaque souple est constituée par une feuille flexible (8) qui est pressée pratiquement sur toute sa surface contre la plaque rigide (11) par un élément d'appui élastique (7).

2. Machine à tirer les calques selon la revendication 1, caractérisée en ce que l'élément d'appui élastique (7) est une couche de résine synthétique mousse qui est soutenue pratiquement sur toute sa surface du côté opposé à la feuille (8).

3. Machine à tirer les calques selon la revendication 1 ou 2, caractérisée en ce que la surface de la plaque plane (11) est recouverte d'une feuille (15) qui est faite, au moins sur sa face dirigée vers la fente de guidage (20), de la matière plastique à coefficient de friction extrêmement faible.

4. Machine à tirer les calques selon l'une quelconque des revendications 1 à 3, caractérisée en ce que la feuille flexible (8) est faite, au moins sur sa face dirigée vers la fente de guidage, de la matière plastique à coefficient de friction extrêmement faible.

5. Machine à tirer les calques selon l'une quelconque des revendications 1 à 4, caractérisée en ce que les gorges (22) formées dans la paire de cylindres d'entraînement (17, 18) sont en face les unes des autres.

6. Machine à tirer les calques selon l'une quelconque des revendications 3 à 5, caractérisée en ce que sur les languettes (23), les feuilles (8, 15) qui forment les surfaces de la fente de guidage (20) se prolongent au moins jusque dans la fente entre cylindres (19).

7. Machine à tirer les calques selon l'une quelconque des revendications 1 à 6, caractérisée en ce que plusieurs unités de tirage sont placées à la suite les unes des autres avec interposition de paires de cylindres d'entraînement.

8. Machine à tirer les calques selon la revendication 7, caractérisée en ce que les feuilles qui forment les surfaces des fentes de guidage dans les unités de tirage successives sont réalisées chacune d'une seule pièce à travers toutes les unités de tirage, avec des découpures pour le passage des parties actives des paires de cylindres qui se trouvent entre les gorges circonférentielles.

9. Machine à tirer les calques selon l'une quelconque des revendications 1 à 8, caractérisée en ce qu'il est contenu, entre les feuilles (8, 15) qui forment les surfaces de la fente de guidage, une troisième feuille en une matière plastique à coefficient de friction extrêmement faible pour la formation de deux fentes de guidage séparées pour la feuille de dessin-modèle et la feuille de matériel de tirage, cette troisième feuille étant découpée dans les parties actives des paires de cylindres d'entraînement se trouvant entre les gorges circonférentielles.

10. Machine à tirer les calques selon l'une quelconque des revendications 1 à 9, caractérisée en ce qu'elle comprend un dispositif de développement qui présente, pour le matériel de développement, une fente de guidage (36) formée entre deux feuilles (37, 38) à coefficient de friction extrêmement faible et qui comprend exclusivement, comme élément transporteur, une paire de cylindres d'entraînement disposée du côté de l'entrée et, le cas échéant, une paire de cylindres d'entraînement du côté de la sortie, la feuille située du côté de la chambre à gaz de développement (41) étant ajourée et l'autre étant supportée par une couche de résine synthétique mousse élastique (39) qui, à son tour, prend appui pratiquement sur toute sa surface.

F i g.1

F i g.2

Fig.3

0 117 294